# EUROPÄISCHE PATENTANMELDUNG

(11) **EP 1 416 609 A2**
(43) Veröffentlichungstag der Anmeldung: **06.05.2004**
(21) Anmeldenummer: 03024579.9
(22) Anmeldetag: 28.10.2003
(51) Int. Cl.: H02K 1/20

(54) **Dynamoelektrische Maschine mit innenliegenden Statorkühlkanälen**

(30) Priorität: 28.10.2002 DE 10250178; 18.11.2002 DE 10253699
(71) Anmelder: Loher GmbH, 94099 Ruhstorf/Rott (DE)
(72) Erfinder: Zwack, Josef, 94060 Pocking (DE)
(74) Vertreter: Zinnecker, Armin, Dipl.-Ing.

(57) **Zusammenfassung**

Eine dynamoelektrische Maschine umfaßt ein Statorblechpaket (4), eine Formspulenwicklung (5) und einen Innenkühlkreislauf. Um eine derartige dynamoelektrische Maschine zu verbessern sind im Statorblechpaket (4) axiale Kühlkanäle (11) in unmittelbarer räumlicher Nähe zur Statorwicklung (5) vorgesehen (Fig. 4).

## Beschreibung

Die Erfindung betrifft eine dynamoelektrische Maschine mit einem Statorblechpaket, einer Formspulenwicklung und einem Innenkühlkreislauf. Bei der dynamoelektrischen Maschine kann es sich um einen Elektromotor oder um einen Generator handeln.

Dynamoelektrische Maschinen sind in der Regel mit einer in geeigneter Weise ausgebildeten Kühlung versehen, um die in der Maschine erzeugte Verlustwärme abzuführen. Eine Übersicht über mögliche Arten der Kühlung dynamoelektrischer Maschinen ist z.B. der IEC 34-6 zu entnehmen.

Insbesondere in elektrischen Maschinen größerer Leistung wird zur Verbesserung der Wärmeabfuhr aus dem Inneren der Maschine in der Regel eine Innenkühlung der Maschine ausgeführt. In diesem Falle strömt ein Kühlmedium (bei gasgefüllten Maschinen z.B. Luft oder ein anderes Kühlgas, aber auch Flüssigkeiten wie Kältemittel, Öle oder wäßrige Lösungen sind möglich) in axialer Richtung durch den Luftspalt zwischen Rotor und Stator, gegebenenfalls durch axiale Kühlbohrungen im Rotor und gegebenenfalls durch axiale Kühlbohrungen im Stator. Gleichzeitig können zur Verbesserung der Kühlung zusätzliche radiale Kühlschlitze in Rotor und/oder im Stator ausgeführt sein.

In geschlossenen Maschinen (z.B. nach Schutzart z.B. IP 44 oder besser) ist der Kühlkreislauf als geschlossener interner Kühlkreislauf mit einem zusätzlichen Wärmetauscher zur Abgabe der Wärme an ein externes Kühlmedium ausgebildet.

Bei offenen Maschinen (z.B. nach Schutzart IP23) durchströmt das die Maschine umgebende Gas (in der Regel Luft) den Motor. Die interne Kühlung kann dabei einflutig oder zweiflutig ausgebildet sein, wobei im Einzelfall eine Einbeziehung der Ständemut in den Kühlkreislauf durch eine besonderen Gestaltung der Ständernutform erfolgt.

Gleichzeitig wird insbesondere bei dynamoelektrischen Maschinen höherer Leistung und insbesondere bei Mittel- und Hochspannungsmaschinen mit Nennspannungen von größer 1 kV die Statorwicklung als sogenannte Formspulenwicklung ausgeführt. Diese Form der Spulenwicklung führt zu exakt definierten geometrischen Abmessungen der Spule und einer harten äußeren Spulenoberfläche. Bei niedrigeren Nennspannungen und kleineren Motorleistungen werden im Gegensatz hierzu in der Regel sogenannte Drahtwicklungen eingesetzt. Die Spulen der Statorwicklung bestehen, wie der Name bereits sagt, aus Drahtspulen, die in die Statornuten eingelegt oder eingezogen werden. Diese Spulen besitzen keine exakt definierte geometrische Form und zunächst (vor der abschließenden Imprägnierung) auch keine harte äußere Spulenoberfläche

Die weiteren Ausführungen der vorliegenden Erfindung beziehen sich auf dynamoelektrische Maschinen mit Formspulenwicklung, insbesondere bei 2-poligen Maschinen.

Aus der EP 0 627 804 B1 und den in dieser Schrift genannten älteren Veröffentlichungen sind Blechschnitte für die Kühlung dynamoelektrischer Maschinen bekannt, bei denen eine erhöhte Kühlung durch axiale Kühlkanäle im Stator erreicht wird. Die genannten Veröffentlichungen zeigen axiale Kühlkanäle mit rundem oder ovalem Querschnitt am äußeren Umfang des Statorkerns oder mondförmige Kanäle, die sich im Stator und insbesondere in der Nähe der Statornuten zur Aufnahme der Ständerwicklung befinden. Insbesondere die in der EP 0 627 804 B1 gezeigte Anordnung stellt in ihrer Ausprägung der Wicklungsnuten eine typische Maschine mit einer Drahtwicklung und ohne zusätzliche radiale Kühlschlitze im Stator und gegebenenfalls im Rotor dar.

Insbesondere bei 2-poligen Maschinen erfordern die elektromagnetischen und mechanischen Verhältnisse (relativ kleiner Rotordurchmesser und entsprechend kleiner Statorinnendurchmesser) Besonderheiten bei der Ausgestaltung der Kühlung. Bei Maschinen größerer Leistung mit Formspulenwicklung und mit zusätzlichen radialen Kühlschlitzen in Stator und Rotor sind derzeit Gestaltungsvarianten Stand der Technik, die nachfolgend anhand der Zeichnungsfiguren 1 bis 3 erläutert werden. Dort zeigt
- Fig. 1: einen schematischen Querschnitt durch das Blechpaket eines 2-poligen Motors ohne magnetische Nutverschlußkeile, aber mit Luftnut,
- Fig. 2: einen schematischen Querschnitt durch das Blechpaket eines 4- oder höherpoligen Motors mit magnetischen Nutverschlußkeilen und ohne Luftnut und
- Fig. 3: einen schematischen Längsschnitt durch einen Asynchronmotor mit Innenkühlkreislauf in zweiflutiger Ausführung.

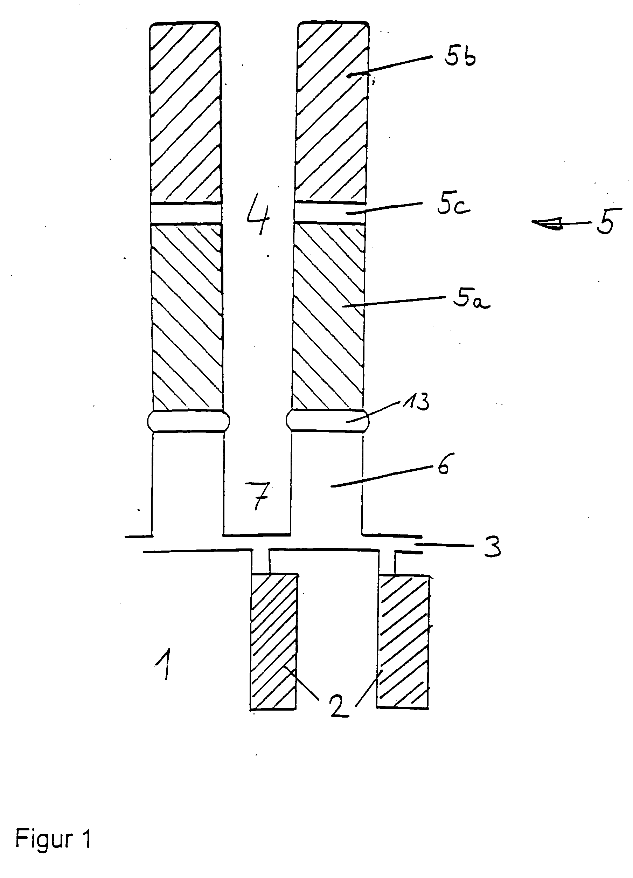

Fig. 1 zeigt eine Ausführungsform mit einer sogenannten Luftnut im Ständerblechpaket in einem schematischen Querschnitt durch das Blechpaket eines 2-poligen Motors ohne magnetische Nutverschlußkeile, aber mit Luftnut und den damit verbundenen hohen Statorzähnen. Im Rotor 1 sind Rotorstäbe 2 vorgesehen. Der Rotor 1 dreht sich unter Bildung eines Luftspalts 3 in dem Stator, in dessen Statorblechen 4 eine Statorwicklung 5 vorgesehen ist, die aus der inneren Teilwicklung 5a, der äußeren Teilwicklung 5b und einem dazwischen liegenden sogenannten Zwischenstück 5c aus Isolationsmaterial besteht. An die innere Teilwicklung 5a schließt sich zum Rotor 1 hin die Luftnut 6 an. Zwischen den Luftnuten 6 liegen die hohen Statorzähne 7. Die gesamte Spulenanordnung wird durch einen nichtmagnetischen Nutverschlußkeil 13, der sich zwischen der inneren Teilwicklung 5a und der Luftnut 6 befindet und der beispielsweise aus Hartgewebematerial hergestellt sein kann, in radialer Richtung fixiert.

Bei dieser Ausführungsform wird ein Teil der Nutfläche des Ständerblechpaketes 4 (zum Luftspalt 3 hin) als axiale Eintrittsfläche für einen Teil der benötigten Kühlluft verwendet, da die Versorgung über die axialen Kühlluftbohrungen des Läufers (rund oder mäanderförmig) und über den Luftspalt nicht ausreicht um die im Bereich des Luftspaltes auftretenden Wärmemengen (durch Rotorverluste und Kupferverluste im Stator) abzuführen. Bei diesem Verfahren kann der Innenkühlkreislauf sowohl in einflutiger als auch in zweiflutiger Ausführung ausgestaltet sein. Bei einer zweiflutigen Ausgestaltung des Kühlkreislaufs werden die radialen Kühlschlitze im Ständerpaket mit wesentlich mehr Kühlluft versorgt, da die Eintrittsfläche im Läuferblechpaket beidseitig erfolgt. Die Folge ist eine bessere und gleichmäßigere Kühlung der Maschine gegenüber einflutiger Ausführung.

Die Verwendung einer Luftnut ist andererseits mit zahlreichen Nachteilen verbunden. Sie führt zum einen zu Schwingungen der freistehenden Zähne mit fn x N1 (mit fn Netzfrequenz, z.B. 50Hz, N1 Ständernutenzahl, z.B. 54, und damit 50Hz x 54 = 2700 Hz; sehr störender Einzelton!). Zum anderen ist mit einer Luftnut kein sinnvoller und dauerhaft mechanisch stabiler Einsatz von magnetischen Nutverschlußkeilen nahe der Statorbohrung (erforderlich zur Glättung des Luftspaltfeldes) möglich, da eine Abstützung der magnetischen Nutverschlußkeile in radialer Richtung nicht gewährleistet ist und somit im Laufe der Zeit aufgrund der auf die magnetischen Nutverschlußkeile wirkenden Kräfte eine unvermeidliche Lockerung und Zerstörung der Keile die Folge wären. Das Fehlen von magnetischen Nutverschlußkeilen ist mit einer Leistungseinbuße (Pulsationsverluste) verbunden. Hinzu kommt die Tatsache, daß die bereits durch die Wickelköpfe aufgeheizte Kühlluft die Wicklung im Ständerblechpaket zusätzlich erwärmt oder zumindest nicht wesentlich kühlt. Dies führt letztendlich zu einem "normalen", jedoch nicht zu einem optimalen Wirkungsgrad.

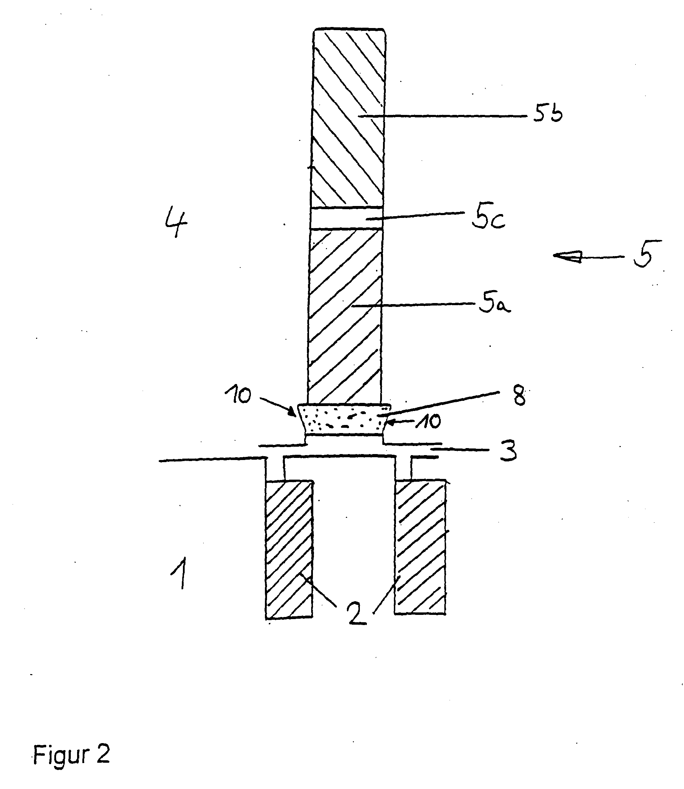

Fig. 2 zeigt schematisch den Aufbau eines heute üblichen Motors (4- oder höherpolig) mit einem einflutigen oder zweiflutigen Kühlkreislauf unter Verwendung von magnetischen Nutverschlußkeilen und ohne Luftnut, bestehend aus einem Rotor 1 mit Rotorstäben 2, der in einem Stator 4 mit einer Statorwicklung 5 unter Bildung eines Luftspalts 3 rotiert. Die Statorwicklung 5 besteht aus der äußeren Teilwicklung 5b und der inneren Teilwicklung 5a und einem dazwischen liegenden sogenannten Zwischenstück 5c aus Isolationsmaterial. An den inneren Rändern der inneren Teilwicklungen 5a sind schwalbenschwanzförmig ausgebildete Nuten 10 vorhanden, in die magnetische Nutverschlußkeile 8 eingebracht sind. Die magnetischen Nutverschlußkeile 8 sind trapezförmig ausgebildet. Sie werden mechanisch zwischen die schwalbenschwanzförmig ausgebildeten Nuten 10 am inneren Rand der Statorbleche 4 geklemmt.

Bei dieser Ausführung sind keine "Luftnuten" sinnvoll, da ja die magnetischen Nutverschlusskeile 8 möglichst nahe am Luftspalt 3 angeordnet sein sollen, um eine gute Glättung des Luftspaltfeldes zu erreichen. Als Ersatz werden in der Regel axiale Kühlbohrungen (meist rund) im Ständerrücken und Läuferrücken ausgeführt, auf radiale Kühlschlitze in Rotor und Stator wird aber meist verzichtet. Dies ermöglicht einen vorteilhaften einfachen Aufbau von Ständer- und Läuferblechpaket Nachteilig wirkt sich die insgesamt schlechte Kühlung aus, da ein Lufteintritt in den Bereich von Rotor und Stator nur von einer Seite möglich ist mit der Folge eines wesentlich reduzierten Luftstroms im Motorinnern. Die einseitige Beströmung mit Kühlmedium führt in axialer Richtung über die Eisenlänge hinweg zu einer stark unterschiedlichen Temperaturverteilung in der Ständerwicklung und im Läuferpaket und den Läuferstäben mit der Folge von
- sogenannten "hot spots" in der Ständerwicklung und in den Läuferstäben;
- zusätzlichen mechanischen Spannungen in der gesamten Maschine infolge der ungleichen Paket- und Gehäuseerwärmung;
- einer insgesamt reduzierten Leistung der Maschine aufgrund der eingeschränkten Wärmeabfuhr.

Aufgabe der Erfindung ist es, eine verbesserte dynamoelektrische Maschine der eingangs angegebenen Art vorzuschlagen.

Erfindungsgemäß wird diese Aufgabe dadurch gelöst, daß im Statorblechpaket axiale Kühlkanäle in unmittelbarer räumlicher Nähe zur Statorwicklung vorgesehen sind.

Der Innenkühlkreislauf kann offen oder geschlossen sein. Er kann einflutig oder zweiflutig ausgestaltet sein.

Vorteilhafte Weiterbildungen sind in den Unteransprüchen beschrieben.

Die Statorwicklung kann Nutverschlußkeile aufweisen. Vorzugsweise sind magnetische Nutverschlußkeile vorgesehen. Die Erfindung kann allerdings auch mit nicht magnetischen Nutverschlußkeilen realisiert werden.

Eine weitere vorteilhafte Weiterbildung ist dadurch gekennzeichnet, daß die axialen Kühlkanäle in radialer Richtung unmittelbar außerhalb der Statorwicklung, insbesondere der äußeren Teilwicklung der Statorwicklung, vorgesehen sind.

Nach einer weiteren vorteilhaften Weiterbildung sind die axialen Kühlkanäle von der Statorwicklung, insbesondere der äußeren Teilwicklung, durch einen dünnen Blechstreifen getrennt.

Vorteilhaft ist es, wenn die axialen Kühlkanäle von der Statorwicklung, insbesondere der äußeren Teilwicklung, durch einen Nutverschlußkeil, insbesondere einen nicht magnetischen Nutverschlußkeil, getrennt sind.

Eine weitere vorteilhafte Weiterbildung ist dadurch gekennzeichnet, daß die axialen Kühlkanäle zwischen einer inneren und einer äußeren Teilwicklung der Statorwicklung vorgesehen sind.

Die axialen Kühlkanäle können von der inneren und der äußeren Teilwicklung durch jeweils einen Nutverschlußkeil getrennt sein.

Vorzugsweise ist der Innenkühlkreislauf geschlossen. Die Erfindung kann allerdings auch mit einem offenen Innenkühlkreislauf realisiert werden.

Als Kühlmedium kann ein Gas, beispielsweise Luft, CO₂, Kältemittel oder eine Flüssigkeit, z.B. Kältemittel, Öle oder wässrige Lösungen, eingesetzt werden.

Vorzugsweise sind im Stator radiale Kühlschlitze vorgesehen.

Im Rotor können axiale Kühlkanäle und radiale Kühlschlitze vorgesehen sein.

Nach einer weiteren vorteilhaften Weiterbildung sind die axialen Kühlkanäle nur in dem oder den Randbereichen des Statorblechpakets vorgesehen.

Vorteilhaft ist es, wenn in dem oder den Randbereichen des Rotors keine radialen Kühlschlitze vorgesehen sind.

Nach einer weiteren vorteilhaften Weiterbildung sind die radialen Kühlschlitze im Stator und Rotor zumindest teilweise einander lokal zugeordnet.

Eine weitere vorteilhafte Weiterbildung ist dadurch gekennzeichnet, daß die radialen Kühlschlitze im Stator und/oder im Rotor durch Verschlußstopfen oder Trennbleche voneinander getrennt sind.

Durch die Erfindung ist es möglich, den Einsatz von magnetischen Nutverschlußkeilen bei einem zweiflutigen Kühlkreislauf, vorwiegend bei 2-poligen Maschinen, zu realisieren mit den Zielen,
- einer optimalen mechanischen Fixierung der magnetischen Nutverschlußkeile analog zu üblichen Ausführungen bei 4- und höherpoligen Maschinen (vgl. Fig. 2)
- bei gleichzeitiger Versorgung der radialen Kühlluftkanäle im Ständerpaket mit ausreichender Menge an Kühlluft
- und weiterhin ausreichender Abfuhr von Wärme aus den beiden Wickelköpfen
- zusammen mit einer optimierter Wärmeabfuhr aus den Ständerblechpaketscheiben, die mindestens einer zweiflutigen Ausführung mit Kühlluftnuten entspricht,
- bei einer insgesamten Leistungssteigerung der Maschine,
- verbunden mit einer deutliche Reduzierung des Gesamtgeräusches durch
   - die Verminderung/Vermeidung des Einzeltones, hervorgerufen durch das oben beschriebene Schwingen der Ständerzähne,
   - und die Reduzierung des elektromagnetisch, durch das inhomogene Luftspaltfeld hervorgerufenen Geräusches (Stichwort "Nutung").

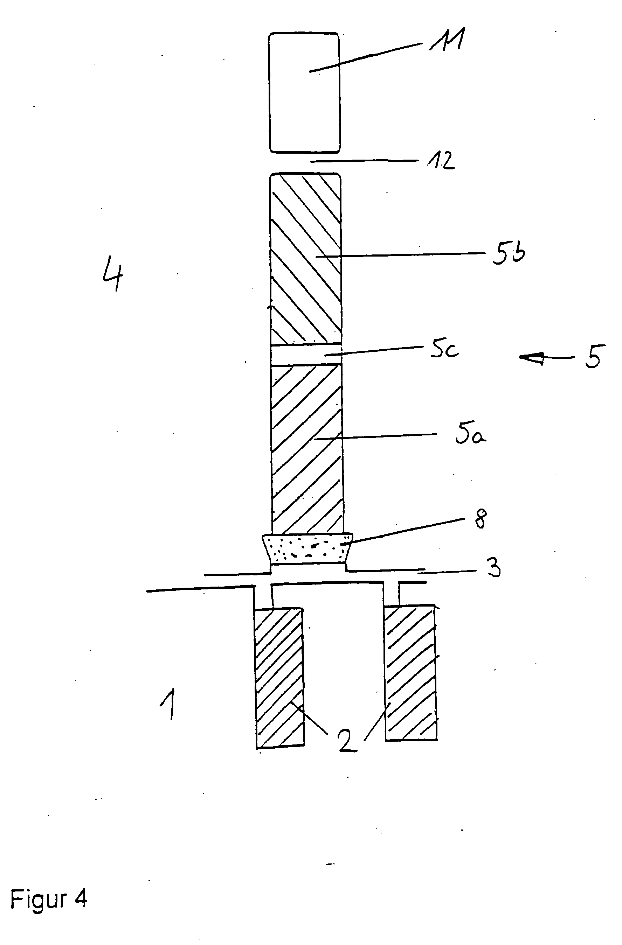

Ausführungsbeispiele der Erfindung werden nachstehend anhand der beigefügten Zeichnung im einzelnen erläutert. In der Zeichnung zeigt
- Fig. 4: einen Motor mit axialen Kühlkanälen, die in radialer Richtung unmittelbar außerhalb der Statorwicklung vorgesehen sind, in einem schematischen Querschnitt,

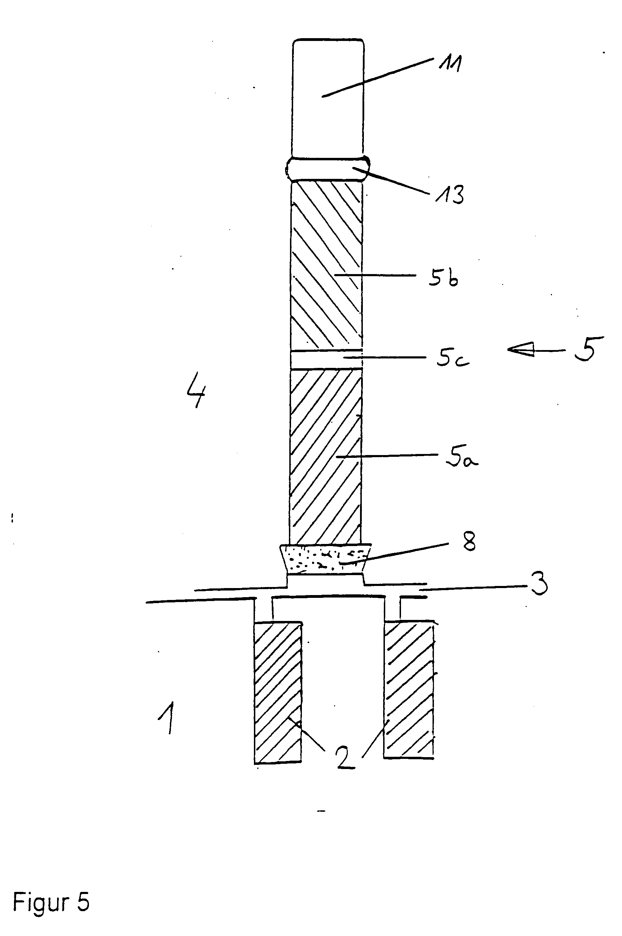

- Fig. 5: eine Abwandlung des Motors gemäß Fig. 4,

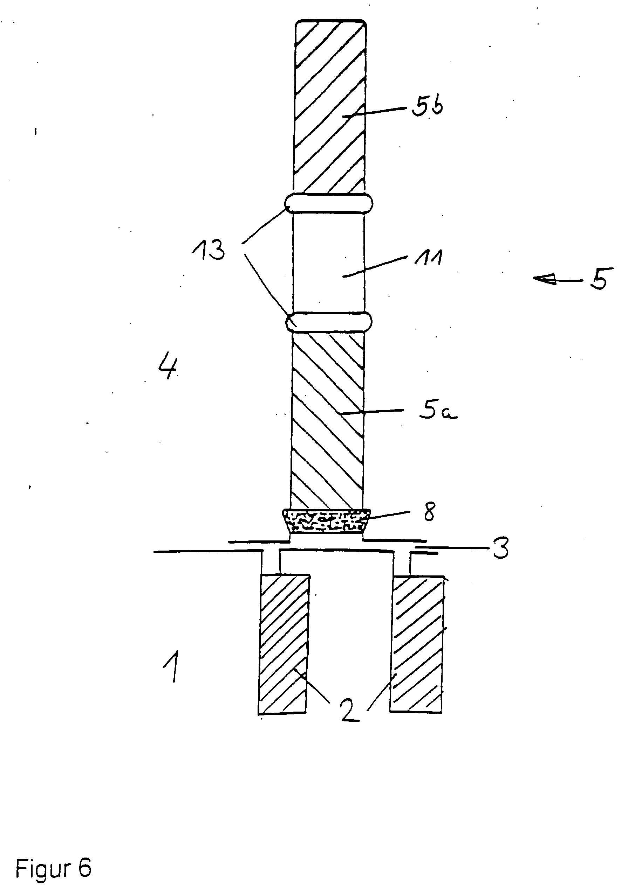

- Fig. 6: einen Motor mit axialen Kühlkanälen, die zwischen einer inneren und einer äußeren Teilwicklung der Statorwicklung vorgesehen sind,

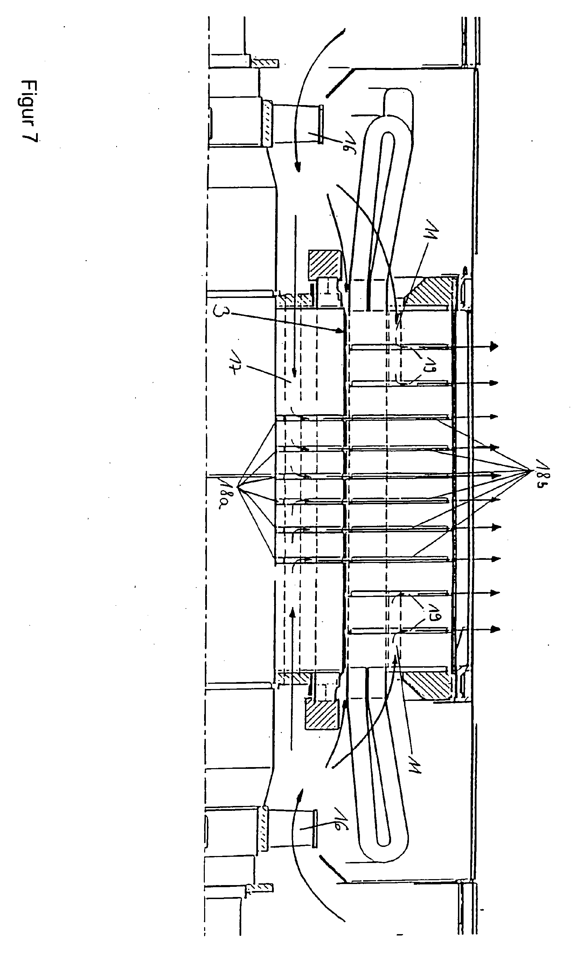

- Fig. 7: einen Motor mit einem zweiflutigen Gesamtkühlkreislauf, wobei die axialen Kühlkanäle nur in den Randbereichen des Statorblechpakets vorgesehen sind, in einem schematischen Längsschnitt,

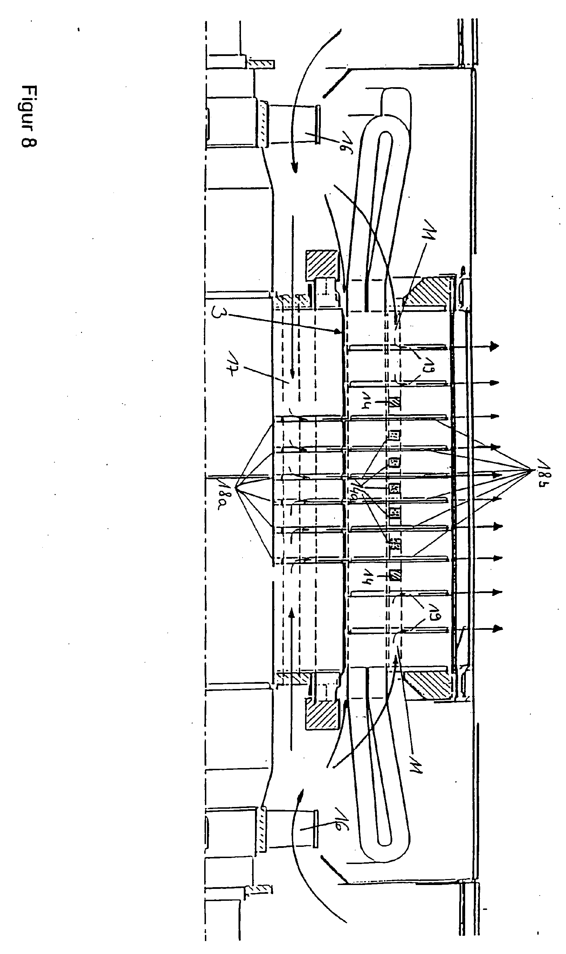

- Fig. 8: eine Abwandlung des Motors gemäß Fig. 7 und

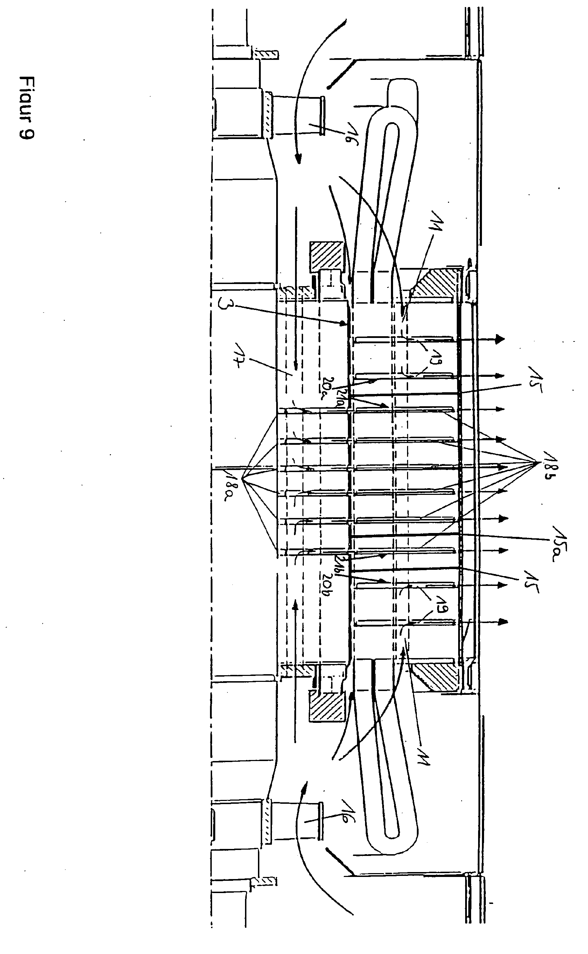

- Fig. 9: eine weitere Abwandlung des Motors gemäß Fig. 7 und 8.

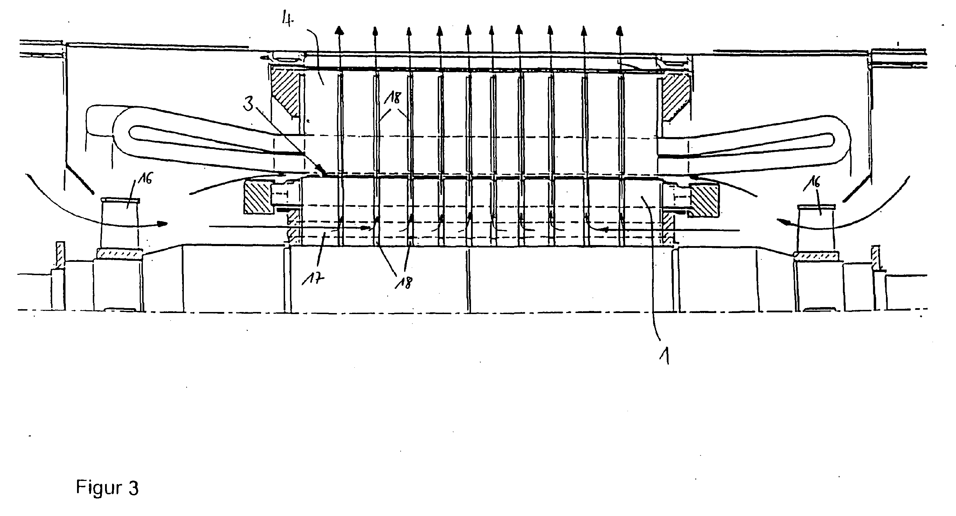

Fig. 3 zeigt beispielhaft und schematisch den Innenkühlkreislauf eines Asynchronmotors in zweiflutiger Ausführung. Unter einer zweiflutigen Ausführung wird eine Ausführung verstanden, bei der die Kühlmediumsführung einen Zustrom von Kühlmedium in den Blechpaketbereich von beiden Seiten her realisiert. Eine einflutige Ausführung ist demgegenüber eine Ausführung, bei der der Zustrom von Kühlmedium in den Blechpaketbereich nur von einer Seite erfolgt. Das Kühlmedium wird von den beiden Axiallüftern 16 auf der Motorwelle aus dem Bereich des Wärmetauschers angesaugt und in den Bereich des Blechpaketes des Motors gepreßt. Das Kühlmedium strömt in die axialen Kühlbohrungen des Rotors 17 und in den Luftspalt 3 zwischen Rotorblechpaket und Statorblechpaket. Durch die Rotationsbewegung des Rotors wird das Kühlmedium im Luftspalt und in den axialen Kühlkanälen im Rotor in eine rotierende Bewegung gebracht und dabei über die vorhandenen radialen Kühlschlitze 18 in Richtung Wärmetauscher gefördert. Der gesamte Rotor arbeitet hierbei wie ein Radiallüfter.

Um einen Gesamtquerschnitt zum Durchtritt von Kühlmedium entsprechend der Anordnung in Fig. 1 zu realisieren und gleichzeitig eine optimale Fixierung der magnetischen Nutverschlußkeile entsprechend der Anordnung in Fig. 2 zu realisieren, werden in der vorliegenden Erfindung verschiedene in den Figuren 4 bis 6 dargestellte Ausgestaltungen vorgeschlagen.

Figur 4 zeigt die erfindungsgemäße Anordnung eines Statorblechquerschnittes mit magnetischem Nutverschlußkeil entsprechend der Darstellung in Fig. 2, wobei zur Erhöhung des axialen Kühlluftquerschnitts jedoch ein rechteckiger, trapezförmiger, ovaler oder runder Kühlkanal 11 in radialer Richtung unmittelbar neben der äußeren Teilwicklung 5b und von dieser nur durch einen dünnen Blechstreifen 12 getrennt ausgeführt ist. Der schmale Blechsteg 12 zwischen der äußeren Teilwicklung 5b und dem axialen Kühlkanal 11 ermöglicht einen sehr guten Wärmeübergang zwischen der Wärmequelle (Teilwicklung) und dem im Kühlkanal strömenden Kühlmittel. Gleichzeitig erlaubt die Anordnung die Realisation einer großen Kühlkanalquerschnittsfläche. Sie läßt sich mit der direkten räumlichen Zuordnung zwischen Statomut und Kühlkanal sehr gut über heute übliche Kreisstanzverfahren in einem Arbeitsgang fertigen. Die axialen Kühlkanäle 11 sind in radialer Richtung unmittelbar außerhalb der äußeren Teilwicklung 5b der Statorwicklung 5 vorgesehen.

Figur 5 zeigt analog zur Figur 4 eine erfindungsgemäße Anordnung eines Statorblechquerschnittes mit magnetischem Nutverschlußkeil entsprechen der Darstellung in Fig. 2, wobei zur Erhöhung des axialen Kühlluftquerschnitts jedoch ein rechteckiger, trapezförmiger, ovaler oder runder Kühlkanal 11 in radialer Richtung unmittelbar neben der äußeren Teilwicklung 5b und von dieser nur durch einen normalen (nichtmagnetischen) Nutverschlußkeil 13, z.B. aus Hartgewebematerial, getrennt, ausgeführt ist. Der nichtmagnetische Nutverschlußkeil 13 sorgt an dieser Stelle für die Fixierung der Statorspulen in radialer Richtung und ermöglicht gleichzeitig einen guten Wärmeübergang zwischen der äußeren Teilwicklung 5b und dem im axialen Kühlkanal 11 strömenden Kühlmittel. Ebenso wie die Anordnung der Figur 4 erlaubt die hier gezeigte Anordnung die Realisation einer großen Kühlkanalquerschnittsfläche. Sie läßt sich mit der direkten Zuordnung von Statornut und Kühlkanal (Statomut und Kühlkanal sind hier ein zusammenhängender Ausbruch im Statorblech) wie eine normale Statomut über heute übliche Kreisstanzverfahren in einem Arbeitsgang fertigen.

Figur 6 zeigt analog zu den Figuren 4 und 5 eine erfindungsgemäße Anordnung eines Statorblechquerschnittes mit magnetischem Nutverschlußkeil entsprechend der Darstellung in Fig. 2, wobei zur Erhöhung des axialen Kühlluftquerschnitts jedoch ein rechteckiger, trapezförmiger, ovaler oder runder Kühlkanal 11 in radialer Richtung unmittelbar zwischen innerer 5a und äußerer Teilwicklung 5b und von diesen jeweils nur durch einen normalen (nichtmagnetischen) Nutverschlußkeil 13 getrennt, ausgeführt ist. Die nichtmagnetischen Nutverschlußkeile 13 sorgen an diesen Stellen für eine Fixierung der Statorspulen in radialer Richtung und ermöglichen gleichzeitig einen guten Wärmeübergang zwischen innerer 5a bzw. äußerer Teilwicklung 5b und dem im axialen Kühlkanal 11 strömenden Kühlmittel. Ebenso wie die Anordnungen der Figuren 4 und 5 erlaubt die hier gezeigte Anordnung die Realisation einer großen Kühlkanalquerschnittsfläche. Sie läßt sich mit der direkten Zuordnung von Statornut und Kühlkanal (Statornut und Kühlkanal sind hier ein zusammenhängender Ausbruch im Statorblech) wie eine normale Statornut über heute übliche Kreisstanzverfahren in einem Arbeitsgang fertigen.

Figur 7 zeigt eine vorteilhafte Ausgestaltung des Gesamtkühlkreislaufs einer zweiflutigen dynamoelektrische Maschine entsprechend der Erfindung. Das Kühlmedium wird von den beiden Axiallüftern 16 auf der Motorwelle aus dem Bereich des Wärmetauschers angesaugt und in den Bereich des Blechpaketes des Motors gepreßt. Die erfindungsgemäßen axialen Kühlkanäle 11 sind nur in den Randbereichen des Statorblechpaketes vorhanden, z.B. in einem Bereich von ca. 15-40% der Eisenlänge jeweils von beiden Seiten, und die Kühlung des Stators erfolgt in diesen Bereichen über einen Kühlmediumsstrom, der durch die axialen Kühlkanäle von den Blechpaketenden her eintritt und über die in diesen Bereichen vorhandenen radialen Kühlschlitze 19 wieder aus dem Blechpaket austritt. In den Randbereichen des Rotorblechpaketes, entsprechend ca. 15-40% der Eisenlänge jeweils von beiden Seiten, sind dabei keine radialen Kühlschlitze vorhanden.

Die zentralen Bereiche von Statorblechpaket und Rotorblechpaket, entsprechend ca. 70-20% der Eisenlänge jeweils in der Paketmitte, weisen radiale und lokal einander zugeordnete Kühlschlitze 18a, 18b auf, und der Rotor besitzt axiale Kühlbohrungen 17, so daß eine Kühlung des gesamten Rotorblechpaketes und des Zentralbereiches des Statorblechpaketes durch einen Kühlmediumsstrom erfolgt, der an den Enden des Rotorblechpaketes in die axialen Kühlkanäle des Rotors 17 eintritt und über die radialen Kühlschlitze des Rotors 18a und die radialen Kühlschlitze des Stators 18b aus dem zu kühlenden Blechpaketbereich wieder austritt. Der Rotor wirkt dabei als Radiallüfter.

Parallel hierzu verläuft ein Kühlmediumsstrom, der durch den Luftspalt 3 in den Blechpaketbereich eintritt und durch die vorhandenen radialen Kühlschlitze im Statorblechpaket 19 und 18b aufgrund der Radiallüfterwirkung des Rotors aus dem Blechpaket austritt.

Figur 8 zeigt eine weitere vorteilhafte Ausgestaltung des Gesamtkühlkreislaufs einer zweiflutigen dynamoelektrische Maschine entsprechend der Erfindung. In Abwandlung zur Ausführung der Figur 7 sind die axialen Kühlkanäle 11 aus Gründen einer vereinfachten Fertigung beim Stanzen der Bleche für das Statorblechpaket in allen Blechen vorhanden (gleiche Stanzung für alle Bleche des Statorblechpaketes). Die axialen Kühlkanäle im Statorblechpaket sind damit zunächst durchgängig. Sie werden jedoch durch das nachträgliche Einbringen geeigneter Verschlußstopfen 14 (z.B. aus Isoliermaterial und gegebenenfalls zusätzlichen Quellstreifen zur Fixierung) während des weiteren Fertigungsprozesses geschlossen, so daß ein Kühlmediumsfluß analog zu Figur 7 entsteht. Optional können durch zusätzliche Verschluß-stopfen 14a Querströmungen zwischen den einzelnen radialen Kühlschlitzen 18b wirksam unterdrückt werden.

Figur 9 zeigt eine weitere vorteilhafte Ausgestaltung des Gesamtkühlkreislaufs einer zweiflutigen dynamoelektrische Maschine entsprechend der Erfindung. In Abwandlung zur Ausführung der Figur 7 sind die axialen Kühlkanäle 11 analog zu Fig. 8 aus Gründen einer vereinfachten Fertigung beim Stanzen der Bleche für das Statorblechpaket in allen Blechen vorhanden (gleiche Stanzung für alle Bleche des Statorblechpaketes). Die axialen Kühlkanäle im Statorblechpaket sind damit zunächst durchgängig. Sie werden jedoch durch das nachträgliche Einbringen geeigneter Trennbleche 15 beim Aufbau des Statorblechpaketes geschlossen, so daß ein Kühlmediumsfluß analog zu Figur 7 entsteht. Die genannten Trennbleche weisen im Bereich des Kühlkanals 11 keine Aussparung auf sondern sind hier durchgehend. Optional können durch zusätzliche Trennbleche 15a (nur ein Trennblech ist eingezeichnet) Querströmungen zwischen den einzelnen radialen Kühlschlitzen 18b wirksam unterdrückt werden.

In einer gegenüber Figur 9 nochmals verbesserten Ausgestaltung werden die entsprechenden Endbleche, die die einzelnen Teilblechpakete des Statorblechpakets gegenüber den radialen Kühlschlitzen abschließen, als Trennbleche im Sinne der Erfindung ausgebildet, so daß eine Luftstömung gemäß Fig. 7 entsteht. Werden alle Endbleche an den radialen Kühlschlitzen 18b als Trennbleche ausgebildet, so entsteht ein Strömungsbild, das dem von Figur 7 entspricht. Werden nur Trennbleche als Endbleche an den Positionen 20a, 20b oder an den Positionen 21 a und 21 b eingesetzt, so werden ausgleichende Querströmungen zwischen den radialen Kühlkanälen 18b zugelassen.

Weitere technische Ausgestaltungen sowohl bei ein- als auch bei zweiflutigen dynamoelektrischen Maschinen sind bezüglich der axialen Ausbildung der Kühlkanäle 11 bzw. bezüglich der Anordnung von Verschlußstopfen 14, 14a oder von Trennblechen 15, 15a möglich.

So können die Kühlkanäle 11 entsprechend der Figur 7 z.B. auch bis zum jeweils 1., 2., usw. radialen Kühlschlitz 18b (gerechnet jeweils vom näherliegenden Paketende) im Statorblechpaket geführt werden, um entsprechende Strömungsverhältnisse und Druckverhältnisse zur Kühlung der Maschine zu erzielen. Auch eine in axialer Richtung asymmetrische Ausbildung der Kühlkanäle 11 ist denkbar (z.B. einseitig eine Ausbildung der Kühlkanäle wie in Figur 7 gezeigt, die zweite Seite jedoch mit einem Kühlkanal bis zum ersten radialen Kühlschlitz 18b auf dieser Seite).

Analog hierzu sind Ausbildungen der Erfindung denkbar, bei denen enstprechend der Figuren 8 und 9 Verschlußstopfen 14, 14a oder Trennbleche 15, 15a lokal so angeordnet werden, daß ein Teil der mittleren radialen Kühlschlitze 18b jeweils noch über die axialen Kühlkanäle 11 von den Blechpaketenden her mit Kühlluft versorgt wird, um entsprechende Strömungs- und Druckverhältnisse im Motor zu realisieren. Ebenso lassen sich hier wieder axial asymmetrische Verhältnisse durch entsprechenden Einbau von Verschlußstopfen oder Trennblechen realisieren. Durch Weglassen bestimmter, ausgewählter Trennbleche der Trennbleche 15a oder bestimmter, ausgewählter Verschlußstopfen der Verschlußstopfen 14a können auch strömungstechnische Ausgleichsvorgänge im zentralen Bereich des Statorblechpaketes ermöglicht werden.

Die hier diskutierten Anordnungen können sinngemäß sowohl bei einflutigen als auch bei zweiflutigen dynamoelektrischen Maschinen realisiert werden.

Alle oben beschriebenen Ausführungsformen der Luftführung durch axiale und radiale Kühlkanäle sind natürlich auch bei Formspulenwicklungen ohne Einsatz von magnetischen Nutverschlußkeilen (Ersatz der magnetischen Nutverschlußkeile durch normale Nutverschlußkeile) realisierbar.

Die gezeigten Ausführungsbeispiele sollen nur exemplarisch und sinngemäß den Aufbau derartiger Kühlluftführungen verdeutlichen. Die erfindungsgemäße Ausführung derartiger Anordnungen ist nicht an eine bestimmte Anzahl von radialen Kühlschlitzen in Rotor und Stator gebunden. Ebenso sind die gezeigten Abstandsverhältnisse (Breiten der einzelnen Blechpakete und Breiten der radialen Kühlschlitze) nur als beispielhafte Illustrationen zu verstehen.

Bei einer Verwendung von Ständernutformen nach einer der Figuren 4, 5 oder 6 und damit neuartiger Anordnung der Kühlluftführung im Motorinnern bei gleichzeitiger Verwendung von magnetischen Nutverschlußkeilen, ergeben sich folgende Vorteile, die auch meßtechnisch nachgewiesen sind:
- deutliche Leistungssteigerung (ca. 15 bis 20%) durch den Einsatz magnetischer Nutverschlußkeile und die erfindungsgemäße neuartige Kühlluftführung durch die neugestalteten Kühlluftnuten;
- Geräuschreduzierung des elektromagnetisch bedingten Geräusches (Nutung) von ca. 2-3 dB(A) sowie zusätzliche Vermeidung des sehr störenden Einzeltons der Frequenz fn x N1 und damit Vermeidung von teueren und zeitaufwendigen Nachbesserungen;
- erhöhter Wirkungsgrad durch den Einsatz magnetischer Nutverschlußkeile und der höheren Motorleistung bei gleichbleibenden Reibungsverlusten;
- Fixierung der magnetischen Nutverschlußkeile in radialer und axialer Richtung ist gewährleistet und damit eine "normale" Lebensdauer der dynamoelektrischen Maschine gesichert.

Die eingesetzten Trennbleche können gestanzt sein. Sie können allerdings auch laserstrahlgeschnitten sein.

## Patentansprüche

1. Dynamoelektrische Maschine mit einem Statorblechpaket (4), einer Formspulenwicklung (5) und einem Innenkühlkreislauf,
**dadurch gekennzeichnet,**
**daß** im Statorblechpaket (4) axiale Kühlkanäle (11) in unmittelbarer räumlicher Nähe zur Statorwicklung (5) vorgesehen sind.

2. Dynamoelektrische Maschine nach Anspruch 1, **dadurch gekennzeichnet, daß** die Statorwicklung (5) Nutverschlußkeile (8, 13) aufweist.

3. Dynamoelektrische Maschine nach Anspruch 2, **dadurch gekennzeichnet, daß** die Nutverschlußkeile (8) magnetische Nutverschlußkeile sind.

4. Dynamoelektrische Maschine nach einem der vorhergehenden Ansprüche, **dadurch gekennzeichnet, daß** die axialen Kühlkanäle (11) in radialer Richtung unmittelbar außerhalb der Statorwicklung (5), insbesondere der äußeren Teilwicklung (5b) der Statorwicklung, vorgesehen sind.

5. Dynamoelektrische Maschine nach einem der vorhergehenden Ansprüche, **dadurch gekennzeichnet, daß** die axialen Kühlkanäle (11) von der Statorwicklung (5), insbesondere der äußeren Teilwicklung (5b), durch einen dünnen Blechstreifen (12) getrennt sind.

6. Dynamoelektrische Maschine nach einem der vorhergehenden Ansprüche, **dadurch gekennzeichnet, daß** die axialen Kühlkanäle (11) von der Statorwicklung (5), insbesondere der äußeren Teilwicklung (5b), durch einen Nutverschlußkeil (13) getrennt sind.

7. Dynamoelektrische Maschine nach einem der vorhergehenden Ansprüche, **dadurch gekennzeichnet, daß** die axialen Kühlkanäle (11) zwischen einer inneren (5a) und einer äußeren Teilwicklung (5b) der Statorwicklung (5) vorgesehen sind.

8. Dynamoelektrische Maschine nach Anspruch 7, **dadurch gekennzeichnet, daß** die axialen Kühlkanäle (11) von der inneren (5a) und äußeren Teilwicklung (5b) durch jeweils einen Nutverschlußkeil (13) getrennt sind.

9. Dynamoelektrische Maschine nach einem der vorhergehenden Ansprüche, **dadurch gekennzeichnet, daß** der Innenkühlkreislauf geschlossen ist.

10. Dynamoelektrische Maschine nach einem der vorhergehenden Ansprüche, **dadurch gekennzeichnet, daß** als Kühlmedium ein Gas und/oder eine Flüssigkeit einsetzbar ist.

11. Dynamoelektrische Maschine nach einem der vorhergehenden Ansprüche, **dadurch gekennzeichnet, daß** im Stator radiale Kühlschlitze (18b) vorgesehen sind.

12. Dynamoelektrische Maschine nach einem der vorhergehenden Ansprüche, **dadurch gekennzeichnet, daß** im Rotor axiale Kühlkanäle (17) und radiale Kühlschlitze (18a) vorgesehen sind.

13. Dynamoelektrische Maschine nach einem der vorhergehenden Ansprüche, **dadurch gekennzeichnet, daß** die axialen Kühlkanäle (11) nur in dem oder den Randbereichen des Statorblechpakets (4) vorgesehen sind.

14. Dynamoelektrische Maschine nach Anspruch 12 oder 13, **dadurch gekennzeichnet, daß** in dem oder den Randbereichen des Rotors keine radialen Kühlschlitze (18a) vorgesehen sind.

15. Dynamoelektrische Maschine nach einem der Ansprüche 11 bis 14, **dadurch gekennzeichnet, daß** die radialen Kühlschlitze (18b, 18a) im Stator und Rotor zumindest teilweise einander lokal zugeordnet sind.

16. Dynamoelektrische Maschine nach einem der Ansprüche 11 bis 15, **dadurch gekennzeichnet, daß** die radialen Kühlschlitze (18b, 18a) im Stator und/oder im Rotor durch Verschlußstopfen (14, 14a) oder Trennbleche (15, 15a) voneinander getrennt sind.
